(19) **Europäisches Patentamt**
**European Patent Office**
**Office européen des brevets**

(11) **EP 1 518 828 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
*C02F 1/461* *(2006.01)*      *C02F 1/467* *(2006.01)*
*C02F 101/18* *(2006.01)*

(21) Anmeldenummer: **04021752.3**

(22) Anmeldetag: **14.09.2004**

(54) **Verfahren und Vorrichtung zur anodischen Oxidation von Cyaniden in wässrigen Lösungen**

Process and apparatus for the anodic oxidation of cyanide in aqueous solutions

Procédé et dispositif d'oxydation anodique de cyanures dans des solutions aqueuses

(84) Benannte Vertragsstaaten:
**AT BE BG CH CY CZ DE DK EE ES FI FR GB GR HU IE IT LI LU MC NL PL PT RO SE SI SK TR**

(30) Priorität: **29.09.2003 DE 10345594**

(43) Veröffentlichungstag der Anmeldung:
**30.03.2005 Patentblatt 2005/13**

(73) Patentinhaber: **Hochschule Niederrhein**
**47805 Krefeld (DE)**

(72) Erfinder:
- **Nowack, Norbert**
  **47877 Willich-Anrath (DE)**
- **Heger, Klaus**
  **47802 Krefeld (DE)**
- **Korneli, Dirk**
  **47051 Duisburg (DE)**
- **Rheindorf, Angela**
  **47918 Tönisvorst (DE)**

(74) Vertreter: **Fritz & Brandenburg**
**Patentanwälte**
**Postfach 45 04 20**
**50879 Köln (DE)**

(56) Entgegenhaltungen:
**DE-A1- 2 316 124      GB-A- 1 498 355**
**GB-A- 2 051 865      US-A- 4 569 729**
**US-A- 5 281 496**

- **SMITH J R ET AL: "ELECTRODES BASED ON MAGNELI PHASE TITANIUM OXIDES: THE PROPERTIES AND APPLICATIONS OF EBONEX MATERIALS" JOURNAL OF APPLIED ELECTROCHEMISTRY, CHAPMAN AND HALL. LONDON, GB, Bd. 28, Nr. 10, Oktober 1998 (1998-10), Seiten 1021-1033, XP000786928 ISSN: 0021-891X**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Zelle zur elektrochemischen Oxidation von Cyaniden in wäßrigen Lösungen sowie ein Verfahren zur Durchführung der Oxidation.

Cyanide in Wässern, insbesondere in industriellen Abwässern stellen ein großes Problem dar. Cyanide sind hoch toxisch und stark ökotoxisch. Dies gilt in unterschiedlichem Maße für Cyanide, die in den Lösungen als freie Ionen vorliegen oder als Metallkomplexe gebunden sind.

Ein besonderes Problem stellt die Belastung mit Cyaniden insbesondere in industriellen Abwassern dar. Diese fallen in den Bereichen der Oberflächentechnik, insbesondere bei der Metallabscheidung, Entmetallisierungsprozessen, sowie der Herstellung von Metallüberzügen an. Weitere Gebiete sind die Härtung von Stählen durch das Badnitrieren sowie das allgemeine Gebiet der Sonderabfallaufbereitung.

Ein häufig geforderter Grenzwert für die Belastung von Cyaniden in Abwässern liegt bei 1 mg/L. Aufgrund von nationalen oder regionalen Gesetzgebungen können die erlaubten Grenzwerte für Cyanidbelastungen in Abwässern noch unterhalb dieses Wertes liegen.

Es hat in der Vergangenheit nicht an Versuchen gefehlt, die Cyanidbelastung in wäßrigen Lösungen, insbesondere Abwässern, zu verringern. Ein häufig gewählter Ansatz zur Verringerung der Cyanidkonzentration in wäßrigen Lösungen besteht in der Oxidation der Cyanidionen zur Kohlendioxid und Ammoniak.

Die Oxidation erfolgt dabei grundsätzlich in zwei Reaktionsschritten, wobei der erste Reaktionsschritt im Abbau des Cyanidions in alkalischer Lösung über die Oxidation zum Cyanat-anion gemäß der folgenden Redox-Halbreaktion (1) erfolgt:

$$CN^- + 20H^- \Rightarrow H_2O + OCN^- + 2e^- \qquad (1)$$

Das gebildete Cyanatanion $OCN^-$ wird dann in der alkalischen Lösung hydrolytisch gemäß Formel (2) zerlegt:

$$OCN^- + OH^- + H_2O \Rightarrow CO_3^{2-} + NH_3 \qquad (2)$$

Die Übertragung der zwei Elektronen pro Formelumsatz kann durch Oxidationsmittel oder elektrochemischen Wege stattfinden.

Geeignete Oxidationsmittel sind z.B. Peroxide. Verfahren unter Verwendung von Peroxiden sind jedoch in der Regel unwirtschaftlich, da durch katalytische Effekte der in den Abwässern üblicherweise vorhandenen Metallkationen eine starke Zersetzung des Peroxides zu Sauerstoff einsetzt. Häufig muß daher Wasserstoffperoxid in rund 10-fachem Überschuß eingesetzt werden, um eine sichere Oxidation der Cyanide zu gewährleisten. Der kinetisch stabile Cyano-Komplex $[Ni(CN)_4]^{2-}$ wird hierbei oft im nicht hinreichenden Maße zerstört.

Ein weiteres Verfahren besteht im Einsatz von UV-Strahlung in Verbindung mit Wasserstoffperoxid. Derartige Verfahren erfordern üblicherweise hohe Investionskosten. Weiterhin zeigen Sie den Nachteil auf, daß die UV-Strahlung wegen der starken Absorption durch die in den Abwässern vorhandenen Metall-Kationen nur in dünnen Schichten wirksam ist. Es kommt hier zu sogenannten Charge-Transfer-Übergängen. In Folge hiervon ist die Leistung derartiger Reaktoren stark eingeschränkt.

Ein weiteres bekanntes Verfahren besteht in der Verwendung von Ozon. Diese Verfahren zeichnen sich ebenfalls durch hohe Investitionskosten aus. Hinzu tritt, daß der sichere Umgang mit ozonerzeugenden Apparaturen im Betrieb mit hohen Ozon-Konzentrationen äußerst problematisch ist. Ozon weist eine hohe Toxizität, geringe Haltbarkeit und insbesondere eine hohe Aggressivität gegenüber den Apparatebauteilen auf. Die Standzeiten von entsprechenden Apparaturen wird hierdurch stark vermindert.

Bekannt ist ebenfalls der Einsatz von salzartigen Peroxiden, wie z.B. Carot, als Oxidationsmittel. Neben den oben genannten Nachteilen, wie beim Einsatz von Wasserstoffperoxid tritt hier hinzu, daß es zu einer unerwünschten Aufsalzung der Abwässer kommen kann. Dies betrifft insbesondere die Sulfatanreicherung. Hieraus ergeben sich wiederum die Folgen, daß z.B. die Betonröhren von Abwassersystemen aufgrund einer Umwandlung von Calcium-Verbindungen in Calciumsulfat-Dihydrat stattfindet, was eine zerstörende Wirkung auf die Betonröhren hat.

Die ebenfalls bekannte Verwendung von Natriumhypochlorit zur Cyanidoxidation weist ebenfalls Nachteile auf. Die in der Abwasserfracht vorhandenen organischen Stoffe, wie z.B. Tenside können durch den Einsatz von Hypochloriten zu organischen Halogenverbindungen umgesetzt werden. Derartige organische Halogenverbindungen sind ebenfalls häufig toxisch und ökotoxisch.

Die Summenparameter für derartige organische Halogenverbindungen ist der sogenannte AOX-Wert, definiert als an Aktivkohle adsorbierbare organische Halogenverbindungen. Ein typischer tolerierbarer Grenzwert für den AOX-Wert beträgt für Abwässer 1 mg/L.

Die zuvor beschriebenen Verfahren sind z.B. bekannt aus der Monographie: Graef, R.; Taschenbuch der Abwasser-, Umwelttechnik in der Oberflächenveredelung; Verlag Karl Hansa; München (1998, Seiten 135-146) bekannt.

Bekannt sind ebenfalls elektrochemische Verfahren zur Cyanidoxidation. So beschreibt die DE 23 16 124 ein Verfahren zur Oxidation von Cyaniden unter Verwendung von zweidimensionalen Elektroden aus Graphit oder mit Platin beschichteten Titan-Anoden. Die dort beschriebene Vorrichtung weist jedoch den Nachteil auf, daß Graphit in alkalischen Medien zu Graphitoxiden und/oder Graphitsäuren oxidiert werden und die Elektroden deshalb nicht korosionstabil sind sowie nach kurzer Elektrolysezeit passiviert werden. Darüber hinaus ist die Sauerstoffüberspannung klein, so daß die Stromausbeuten auch bei hohen Cyanidkonzentrationen gering sind. Insbesondere letzteres ist unter wirtschaftlichen Aspekten abzulehnen.

Die Platinbeschichtungen von platinbeschichteten Titananoden lösen sich unter der Bildung des Tetracyano-Platinat-(II)-Komplexes langsam auf. Auch diese können sich deshalb in der Praxis nicht bewähren. Darüber hinaus ist das komplexierte Platin-(II)-Kation toxisch und schwer abbaubar.

Aus der DE 40 470 766 ist ebenfalls ein Verfahren zur anodischen Oxidation von Cyaniden bekannt. Dabei werden an der Anode parallel zur Cyanidoxidation Chloride zu Hypochloriten umgesetzt. Die Hypochloritbildung führt jedoch zur weiteren Bildung von AOX-Verbindungen und ist daher abzulehnen.

Aus der GB-A-2 051 865 ist ein Verfahren zur Zersetzung von organischen halogenierten Cyanoverbindungen in einer Elektrolysezelle bekannt, bei dem eine Festbettanode und eine Kathode verwendet werden, wobei das Festbett der Anode leitende und nicht leitende Partikel enthält. Die leitenden Partikel können aus Graphit, Metallen oder Legierungen bestehen, welche in den elektrolytischen Lösungen stabil sind. Für die Elektrolyse von KCN werden hier beispielsweise Partikel aus Magneteisenstein (Magnetit) verwendet.

Die US-A-4 569 729 beschreibt die Verwendung einer Elektrolysezelle mit einem Partikelfestbett in verschiedenen elektrochemischen Prozessen, unter anderem zur Zersetzung von Cyanid-Verbindungen. In diesem Fall dient die Anodenkammer als Hauptelektrodenkammer und die Kathodenkammer als Hilfselektrodenkammer. Als Anodenpartikel werden dabei Graphitpartikel verwendet. Die Konzentration an Cyanid-Ionen einer Eingangslösung kann in der Elektrolysezelle beispielsweise auf etwa 1/8 gesenkt werden.

Aufgabe der vorliegenden Erfindung ist es Verfahren und elektrochemischen Zelle zur leistungsfähigen und kostengünstigen Oxidation von Cyaniden in wäßrigen Lösungen bereit zu stellen und die Nachteile des Standes der Technik zu überwinden.

Gelöst wird die Aufgabe nach den technischen Merkmalen der unabhängigen Ansprüche. Bevorzugte Ausführungsformen sind in den Unteransprüchen dargestellt.

Allgemeine Beschreibung des Erfindungsgedankens.

Die folgende Erfindung stellt eine elektrochemische Zelle bereit, umfassend eine Kathode und eine Anode in Form einer Festbettelektrode. Festbettelektroden sind im Grundsatz bekannt.

Ein weiteres Merkmal der Erfindung ist es, daß die Schüttung der Festbettelektrode aus hochreinen Manganpartikeln oder aus Mischungen daraus unit Partikeln bestehend aus Oxiden des Titans besteht, wobei die Titanoxid-Partikel in der Magneli-Konfiguration vorliegen.

Die vorliegende Erfindung geht von den nachfolgenden bekannten Fakten aus:

Die Stromdichte für die elektrochemische Oxidation von CN⁻ wird durch den Stofftransport an der Elektrode begrenzt. Imitierend wirkt hierbei die Diffusionsgrenzstromdichte, d.h. der konvektive Stofftransport, der wie folgt definiert ist:

$$i_g = k_s z F c_{(x = \infty)} \qquad (3)$$

Die Parameter sind aus der Definitionenliste ersichtlich.

Aus der Formel (3) läßt sich abschätzen, mit welchen Grenzstromdichten und welchen Raum-Zeit-Ausbeuten in $\rho$ zu rechnen ist, wenn die Cyanidoxidation mit konventionellen Elektroden, d.h Ebenen 2-dimensionalen Elektroden durchgeführt wird. Bei derartigen 2-dimensionalen Elektroden ist die mikrokinetische gleich der makrokinetischen Stromdichte. Demgegenüber ist bei 3-dimensionalen Elektroden die makrokinetische Stromdichte wesentlich größer. Es zeigt sich, daß hier der Faktor 10 - 100 erreicht wird, je nach Eindringtiefe des elektrischen Stromes in das Festbett.

Anders ausgedrückt lassen sich mit 3-dimensionalen Elektroden bei gleichen Betriebsbedingungen ca. 20mal höhere Umsatzgeschwindigkeiten erzielen als bei der Verwendung von 2-dimensionalen Elektroden. Dementsprechend steigt die Raum-Zeit-Ausbeute um diesen Wert an, so daß vorteilhafter Weise 3-dimensionale Elektroden auch im Bereich niedriger Cyanidkonzentrationen außerordentlich wirtschaftlich betrieben werden können.

Ausgehend von den grundsätzlichen Vorteilen einer 3-dimensionalen Elektrode, d.h. einer Festbettelektrode ist für die Lösung der obigen Aufgaben die Auswahl des Anodenmaterials für die Festbettelektrode zur Oxidation von Cyaniden von entscheidender Bedeutung.

Überraschenderweise zeigte sich, daß ein Festbett aus Partikeln aus hochreinem Mangan mit einer Reinheit von wenigstens 99 % oder aus Mischungen daraus mit Partikeln aus den Oxide des Titans, wobei die Partikel in der Magneli-Phase vorliegen, besonders geeignet sind.

Bei den Magneli-Phasen handelt es sich um unstöchiometrische Titanoxide der allgemeinen Formel $Ti_nO_{2n-1}$, mit (n= 4 -10). In den Magneli-Phasen treten Sandwich-Strukturen auf. Diese können beispielsweise vom folgenden Typus sein: ....$TiO_2$/$TiO_2$/$TiO_2$/$TiO_2$/$TiO_2$/$TiO_2$/$TiO_2$...

Die TiO-Einheit wird dabei durch benachbarte $TiO_2$-Einheiten vor Oxidation geschützt. Das Redoxpaar $Ti^{4+}/Ti^{2+}$ stellt dabei ein Halbleitersystem dar, wodurch dem Material eine gute elektrische Leitfähigkeit verliehen wird. Diese liegt in ähnlichen Größenordnungen, wie die von Graphit. Weiterhin weisen derartige Phasen eine hohe chemische Beständigkeit auf.

Für die Zwecke der vorliegenden Erfindung sind die Magneli-Phasen $Ti_4O_7$ sowie $Ti_5O_9$ besonders geeignet. Diese weisen überragende elektrische Halbleitereigenschaften auf. In Versuchen zu dieser Erfindung zeigte es sich, daß die Sauerstoffüberspannung in alkalischen wässerigen Lösungen hinreichend hoch lag, so daß Cyanide, auch komplexe Cyanide, gemäß der Reaktionsgleichung (1) mit hoher Effizienz im Bereich niedriger Konzentrationen, d.h. mit geringen Reaktionshemmungen und somit mit niedrigen Überspannungen für die Cyanide an den $TiO_x$-Magneli-Phasen oxidiert werden können. Die Erkenntnis dieses Verhaltens der $TiO_x$-Magneli-Phasen gegenüber den alkalischen cyanidhaltigen Lösungen ist neu und wurde in dieser Erfindung zu einem technischen System umgesetzt. Überraschenderweise verhält sich reines Mangan analog.

Grundsätzlich weisen Magneli-Phasen in alkalischen Lösungen hohe Sauerstoffüberspannungen aus. Es wurde gefunden, daß derartige Festbettanoden in einer erfindungsgemäßen elektrochemischen Zelle bei den verwendeten alkalischen und cyanidischen Elektrolyten im Temperaturbereich von 20 - 40 Grad Celsius und hohen anodischen Strombelastungen über Monate hinweg beständig waren.

Verfahren zur Herstellung von Titanoxid-Partikeln in der Magneli-Phase sind z.B. in der EP 0 047 595 beschrieben.

In einer weiteren Ausführungsform der vorliegenden Erfindung kann das Festbett aus Partikeln aus Mangan gebildet werden. Die Partikel unterliegen grundsätzlich keiner Einschränkung mit der Ausnahme, daß die Reinheit wenigstens 99% besonders bevorzugt 99.5%, beträgt.

Derartige Partikel aus hochreinem Mangan sind grundsätzlich bekannt.

Reines Mangan ist sehr spröde. Aus kommerziell verfügbaren hochreinen Manganplättchen können durch leichten mechanischen Druck und nachfolgendes Sieben die gewünschten Partikelfraktionen gewonnen werden.

Beim Betrieb der erfindungsgemäßen Vorrichtung überziehen sich die Manganpartikel bei anodischer Polarisation in einer kurzen Anlaufphase mit $MnO_2$. Das $MnO_2$ bildet die elektrochemische wirksame Oberfläche zur Cyanidoxidation. Zu beachten ist dabei, daß der elektrische Festbettwiderstand eines Festbettes aus Manganpartikeln höher ist als der eines Festbettes aus reinen $TiO_x$-Magneli-Partikeln. Die Zellspannung ist hier um rund 2 bis 5 V höher anzulegen.

Vergleichsbeispiel:

Es wurde eine Festbettanode mit anodisch polarisierten Bleipartikel zur Oxidation von Cyaniden in wässerigen Lösungen eingesetzt. Es zeigte sich, dass die elektrochemisch aktive $PbO_2$-Schicht langsam zu Blei(II)-oxiden, -hydroxiden und/oder -carbonat umgewandelt wurde. Das Festbett wurde inaktiv und war nicht dimensionsstabil. Die voluminösen Pb-Korrosionsprodukte setzten das Festbett zu und der Strömungswiderstan wuchs stark an. Gleichzeit wurde das Wasser mit hochtoxischen $Pb^{2+}$-Verbindungen kontaminiert.

Weiterhin wurden Festbettandoden aus Glaskohlenstoff, Mesokohlenstoff und kristallinem Graphit eingesetzt. Unter den harten oxidierenden Bedingungen wandelten sich diese zu Graphitverbindungen um, wie Graphitoxiden, Graphitsäuren. Das Festbettmaterial löste sich auf. Die Stromausbeuten und Umsatzgrade sanken auf nahezu Null ab.

Kurze Beschreibung der Figuren:

Figur 1 zeigt eine bevorzugte Ausführungsform des grundsätzlichen Aufbaus einer erfindungsgemäßen Vorrichtung zur anodischen Oxidation von Cyaniden in wäßrigen Lösungen.

Figur 2 zeigt die mittlere Stromausbeute in Abhängigkeit der Cyanidkonzentration bei einem nicht erfindungsgemäßen Festbett mit $TiO_x$-Magneli-Partikel-Schüttung.

Figur 3 zeigt den Umsetzungsgrad in Abhängigkeit von der Cyanidkonzentration mit einem nicht erfindungsgemäßen Festbett mit $TiO_x$-Magneli-Partikel-Schüttung.

Figur 4 zeigt den Umsetzungsgrad in Abhängigkeit von der Anzahl der Durchläufe durch die nicht erfindungsgemäßen

Zelle mit einer $TiO_x$-Magneli-Partikel-Schüttung.

Figur 5 zeigt die mittlere Stromausbeute in Abhängigkeit von der Cyanidkonzentration bei einem Festbett mit Mn-Partikeln.

Figur 6 zeigt den Umsetzungsgrad in Abhängigkeit von der Cyanidkonzentration bei einem Festbett mit Mn-Partikeln.

Figur 7 ist eine zusammenfassende Darstellung der mittleren Stromausbeute in Abhängigkeit der Cyanidkonzentration mit einer Mn-Partikel-Schüttung sowie einer $TiO_x$-Magneli-Partikel Schüttung.

Figur 8 ist eine zusammenfassende Darstellung der mittleren Raum-Zeit-Ausbeute in Abhängigkeit von der mittleren Cyanidkonzentration und einer Mn-Partikel-Schüttung.

Weitere Vorteile der Erfindung werden anhand der detaillierten Beschreibung der Figuren verdeutlicht.

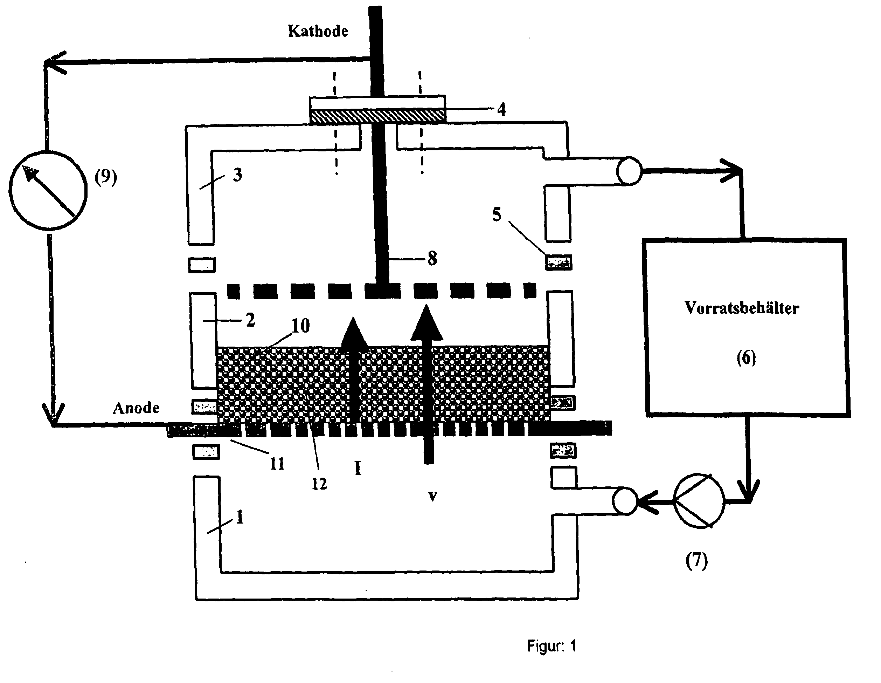

Figur 1 zeigt eine Ausführungsform einer erfindungsgemäßen Zelle. Der Zellkörper besteht aus einem unteren Wannenkörper 1, einem darüber angeordneten Mittelring 2, sowie einem abschließenden Deckelkörper 3. Ein geeignetes Material für die Zellkörper ist Polypropylen. Zwischen den einzelnen Zellkörperteilen 1, 2 und 3 befinden sich Dichtungsringe 5 zur Abdichtung des Zellkörpers.

Im Inneren des Zellkörpers sind die Anode 10, sowie die Kathode 8 angeordnet. Im vorliegenden Ausführungsbeispiel ist die Kathode in Form eines Kupferbleches mit einer Kreisgeometrie von rund 280 mm Durchmesser ausgebildet. Das Kathodenblech ist weiterhin mit Bohrungen versehen, um ein Durchtritt des Elektrolyten, d.h. der zu reinigenden cyanidhaltigen Lösung, zu ermöglichen. Zur elektrischen Verbindung der Kathode 8 an die Spannungsquelle 9 ist die Kathode 8 mit einem Steg versehen, der durch den Deckelkörper 3 hindurchtritt und mittels Quetschverbindung 4 gehalten wird, wobei gleichzeitig die Quetschverbindung 4 einen gasdichten Abschluß herstellt. Ein weiteres geeignetes Material für die Kathode 8 ist Graphit.

In der dargestellten Ausführungsform ist die elektrochemische Zelle für das Batch-Verfahren ausgelegt. Die zu reinigende Lösung wird in dem Vorratsbehälter 6 zwischengespeichert und mittels Pumpe 7 durch die Zelle gespült. Dabei tritt die zu reinigende Lösung unterhalb der Anode 10 in den Wannenkörper 1 ein, durchdringt Anode und Kathode und wird im oberen Bereich abgepumpt. Der Volumenstrom v beträgt in der dargestellten Ausführungsform 100 - 300 L/h, für die dargestellte Ausführungsform mit einem Zellquerschnitt von 30 cm.

Der innerhalb der Zelle dargestellte Pfeil v zeigt die Volumenstromrichtung an. Der innerhalb der Zelle dargestellte Pfeil I die Zellstromrichtung.

Die Spannungsversorgung 9 ist in Form einer Gleichrichteranlage für Gleichstrom mit galvanostatischer Schaltung, d.h. Strom I = konstant ausgelegt. Typische Werte für den Betrieb der Zelle betragen bis zu 15 Volt Spannung und bis zu 30 Ampere Strom, für die dargestellte Ausführungsform mit einem Zellquerschnitt von 30 cm.

Die Anode 10 ist als Partikelbett 12 mit definierter Schichthöhe und definiertem Lückengrad ausgebildet. Die Schichthöhe, nachfolgend als Festbetttiefe $h_F$ bezeichnet, beträgt 2 - 8 cm, bevorzugt 3 - 6 cm, besonders bevorzugt 5 - 6 cm. Der durchschnittliche Lückengrad $\varepsilon$ beträgt 0,4 - 0,65, bevorzugt 0,45 - 0,6, besonders bevorzugt 0,5 - 0,55.

Die Festbettanode 10 ruht auf der Feederelektrode 11, durch die der elektrische Kontakt zur Spannungsquelle 9 bereitgestellt wird. In der dargestellten Ausführungsform wird die Feederelektrode durch ein gelochtes Pb-Blech mit rund 7000 1 mm Bohrungen bezogen auf den 30 cm Kreisdurchmesser gebildet. Die Feederelektrode 11 ist in der dargestellten Ausführungsform zwischen den Dichtungsringen 5 dichtend eingequetscht. Die Feederelektrode 11 kann auch aus weiteren geeigneten Materialien hergestellt werden, wie z.B. Graphit, Glaskohlenstoff oder sogenannten Mesographit. Bei der Auswahl des Materials für die Feederelektrode sind folgende Kriterien zu beachten. Das Material muss hinreichend korrosionsbeständig und mechanisch belastbar sein, um die Last der Anode 10 zu tragen; das Material muss hinreichend elektrisch leitfähig sowie hinreichend bearbeitbar sein, um Durchlässe für die aufzuarbeitenden Lösungen aufzunehmen, um somit wiederum den Volumenstrom sicherzustellen.

Es zeigte sich, dass die Feederelektrode keiner Korrosion durch die elektrochemische Wechselwirkung unterliegt. Es können somit in vorteilhafter Weise für die Feederelektrode 11 auch Materialien eingesetzt werden, die zur Bildung der Anode 10 nicht geeignet sind. Ohne sich auf eine Theorie festzulegen wird davon ausgegangen, dass die Feederelektrode 11 nicht oder nur gering polarisiert wird, wodurch eine elektrochemische Korrosion der Feederelektrode 11 nicht auftritt. Die Polarisation findet ausschließlich oder fast ausschließlich im Festbett 12 der Anode 10 statt.

Die Kathode 8 ist in der dargestellten Ausführungsform ein Kupferblech in Kreisgeometrie mit rund 280 mm Durchmesser, das als gelochtes Blech ausgeführt ist. Die gesamte Kathode ist in axialer Richtung verschiebbar. Während des Betriebes scheiden sich in Abhängigkeit der aufzuarbeitenden Lösung gegebenenfalls Metalle in schwammförmiger Form ab. Diese können ohne Weiteres von der Kathode entfernt werden. Hierzu wird die Kathode 8 durch Öffnen des Deckelkörpers entfernt.

Während des Betriebes wird an der Kathode 8 primär Wasserstoff gemäß der Formel 4 gebildet:

$$2H_2O + 2e^{-1} \rightarrow H_2(g) + 2OH^-. \qquad (4)$$

Hierbei wird ebenfalls in vorteilhafter Weise das Hydroxid-Ion gebildet, was zur Anhebung des pH-Wertes der Lösung führt.

In einer weiteren Reaktion der Kathode bei der Behandlung von metallionenhaltigen Abwässern, wie sie in der Oberflächentechnik/Galvanotechnik anfallen, werden die entsprechenden Metalle aus ihren Cyanidkomplexen abgeschieden. Die Abscheidung erfolgt gemäß Gleichung 5:

$$[Me^{z+}(CN^-)_4] + ze^{-1} \rightarrow Me + 4CN^- \qquad (5)$$

Die an der Kathode gemäß Gleichung 6 freigesetzten Cyanidionen werden anschließend an der Festbettanode oxidiert. Im dargestellten Batch-Verfahren kann dies z.B. beim zweiten Durchlauf der aufzuarbeitenden Lösung durch die Zelle geschehen.

Grundsätzlich ist das Abscheiden von Metallkationen aus ihren Komplexen an den Kathoden von elektrochemischen Zellen bekannt. Nach dem Stand der Technik ist das Aufbrechen derartiger Komplexe jedoch auf weniger stabile Metallkomplexe beschränkt.

Es zeigte sich, dass der thermodynamisch und kinetisch sehr stabile Nickel(II)-Cyano-Komplex, der als besonders ökotoxisch gilt, nahezu vollständig in der erfindungsgemäßen Zelle abgebaut wird. Dies ist besonders von Vorteil, da der Nickel(II)-Cyano-Komplex nicht hinreichend durch starke Oxidationsmittel wie Peroxide oder Hypochorite wirksam abgebaut wird. Entsprechendes gilt für die bekannten elektrochemischen Methoden. In der dargestellten Ausführungsform der vorliegenden Erfindung gelang es den Gehalt des Komplexes unterhalb von 0,05 mg-$Ni^{2+}$/L zu senken.

Nach der vorliegenden Erfindung wird der Nickel(II)-Cyano-Komplex anodenseitig zerstört. Aufgrund der hohen selektiven Oxidationsfähigkeit der erfindungsgemäßen Zelle betreffs Cyanidionen ist es möglich, die im Komplex gebundenen Cyanidionen zu oxidieren. Die betreffenden Metallkationen werden hierdurch aus ihren Cyanidkomplexen befreit und sind der kathodischen Abscheidung zugänglich.

Tabelle 1 zeigt die Ergebnisse der Aufarbeitung von galvanotechnischen, cyanid- und schwermetallhaltigen Abfalllösungen mittels der erfindungsgemäßen Zelle. Das Gesamtvolumen der aufzuarbeitenden Lösung betrug 14 Liter. Das Festbett wurde aus Mangan-Partikeln oder zu Vergleichszwecken aus $TiO_x$-Magneli-Partikeln gebildet. Die Reinheit der Mangan-Partikel-Schüttung betrug 99,5 %. Die Geometrie der Partikel war plättchenförmig mit einem Durchmesser von 1,5 mm und einer Dicke von 1,5 bis 3 mm. Die $TiO_x$-Magneli-Partikel hatten eine zylindrische Partikelform mit einem Durchmesser von 1,6 mm und einer Höhe von 1,6 mm. Die Zelle ist ungeteilt. Die Kathode ist in Form eines Kupferbleches ausgebildet. Die Feederelektrode ist eine Pb-Lochscheibe.

Die Aufarbeitung der zu reinigenden Lösung erfolgt im Batch-Verfahren, wobei gleichzeitig die Lösung jeweils im Kreisprozeß durch die Zelle gefördert wird.

Die weiteren Betriebsbedingungen sind der Tabelle zu entnehmen.

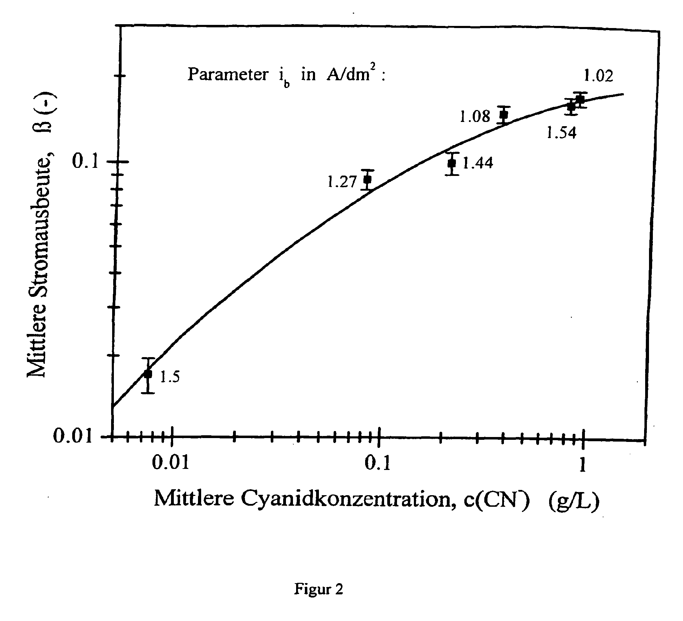

Die Figuren 2 bis 4 zeigen nicht erfindungsgemäße Beispiele zu vergleichszwecken.

Figur 2 ist eine graphische Darstellung der Ergebnisse der Aufarbeitung der zu reinigenden Lösung, wobei die mittlere Stromausbeute in Abhängigkeit von der Cyanidkonzentration im Bereich niedriger Cyanidkonzentrationen gezeigt ist.

Die Parameter sind wie folgt:

Das Festbett wurde mit der zu reinigenden Lösung kontinuierlich durchströmt. Als Partikelschüttung dienten Titanoxid-Magneli-Partikel (zylindrische Partikelform mit d= 1,6 mm, h=1,6 mm); $h_F$=3 cm, pH=13.5, $\varepsilon$=0,54, V'=1,6 L/(h·$dm^2$), 20 °C, $U_Z$= 10 V', $\Delta \approx$10 mm, Parameter $i_b$. Die Zelle war ungeteilt und mit einer Graphitelektrode versehen. Als Feederelektrode diente eine Pb-Lochscheibe. Die Konzentrationen wurden nach einem einmaligen Durchlauf durch die Zelle gemessen.

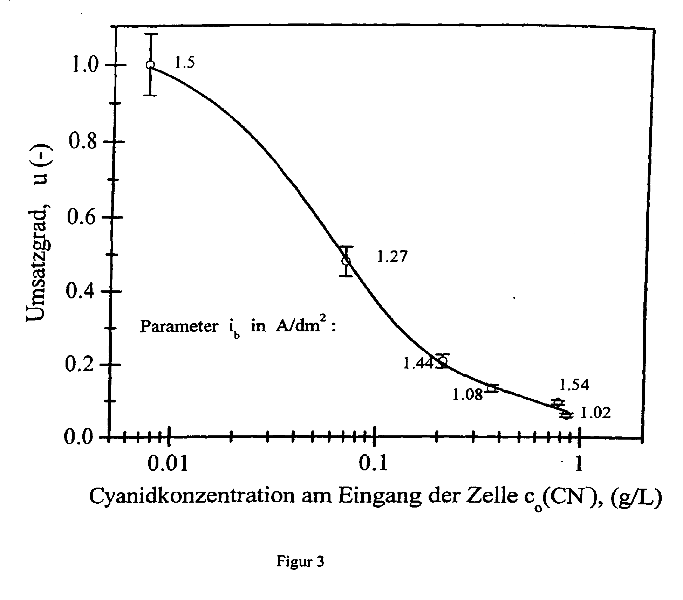

Figur 3 zeigt den Umsetzungsgrad in Abhängigkeit von der Cyanidkonzentration nach Figur 2.

Aus den Figuren 2 und 3 ist ersichtlich, dass eine wirkungsvolle Cyanidoxidation auch in niedrigsten Konzentrationsbereichen möglich ist.

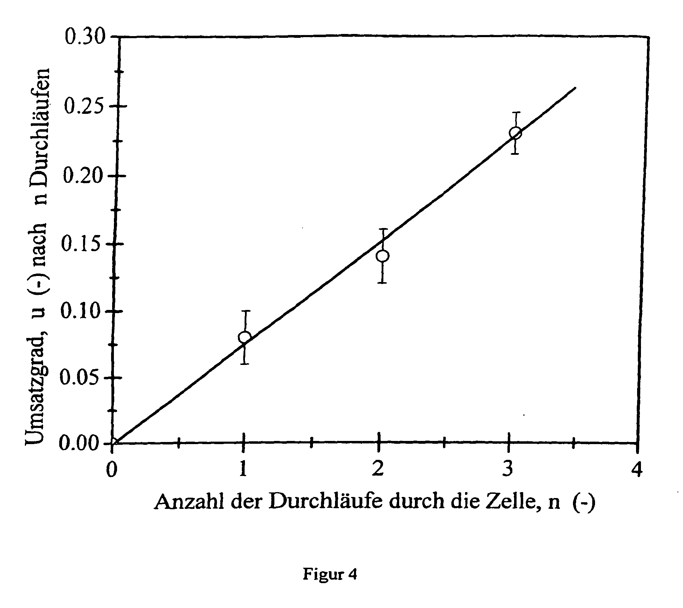

Figur 4 zeigt die Ergebnisse eines Langzeitversuches. Aufgetragen ist der Umsetzungsgrad in Abhängigkeit der Anzahl der Durchläufe (n) der zu reinigenden Lösung durch die Zelle. Ebenfalls im Bereich niedriger Cyanidkonzentrationen. Die Parameter sind identisch mit denen gemäß der Figur 1, wobei weiterhin $i_b$=0,94-0,85 A/$dm^2$ und $\beta$=0,2-0,3 betrugen.

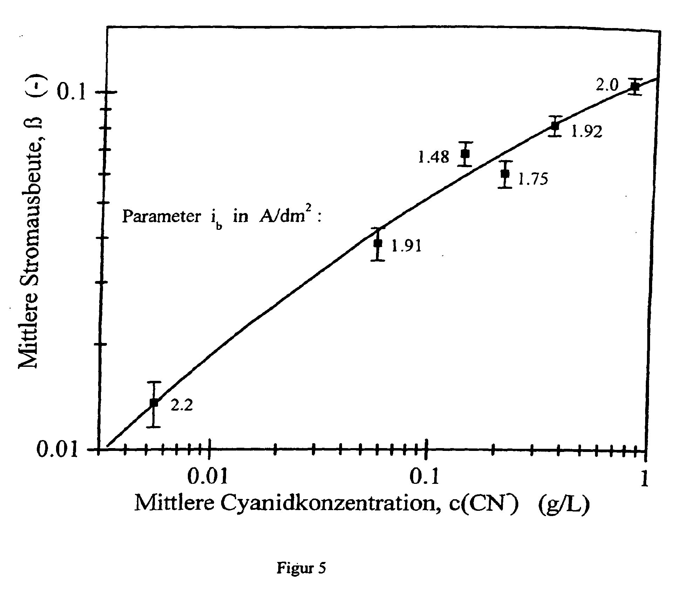

Figur 5 zeigt die mittlere Stromausbeute in Abhängigkeit von der Cyanidkonzentration im Bereich niedriger Cyanidkonzentrationen, bei Verwendung eines Festbettes mit Mn-Partikeln. Es galten folgende Parameter: Das Festbett aus Mn-Partikeln wurde kontinuierlich durchströmt. Die Reinheit des Mangans betrug 99,5 %, die Partikel waren als Plättchen von 1,5 mm Durchmesser mit einer Dicke von 1,5 bis 3 mm ausgeführt; $h_F$=4 cm, pH=13.5, $\varepsilon$=0,52, V. =1,6 L(h·dm$^2$), 20 °C, $U_Z$= 15 V, $\Delta\approx$10 mm, Parameter $i_b$. Die Zelle war ungeteilt und mit einer Graphitelektrode versehen, als Feederelektrode wurde eine Pb-Lochscheibe verwendet.

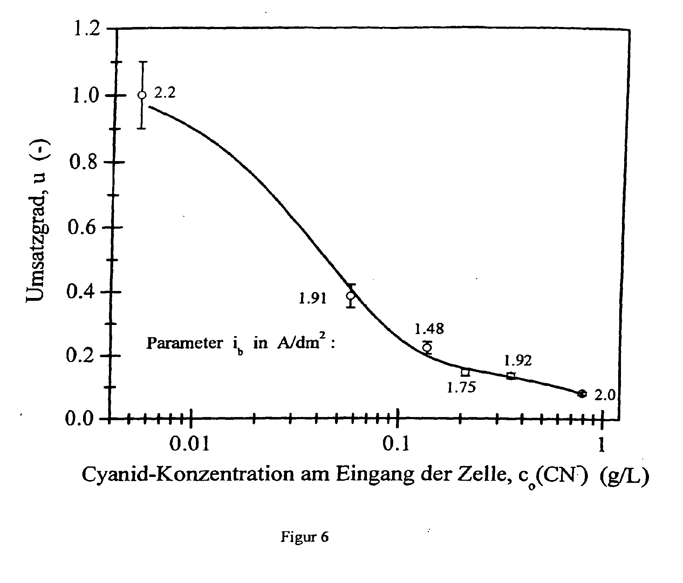

Figur 6 zeigt die Ergebnisse nach Figur 5 aufgetragen als Umsetzungsgrad in Abhängigkeit der Cyanidkonzentration.

Aus den Figuren 5 und 6 zeigt die überragende Eignung der erfindungsgemäßen Zelle mit Manganpartikeln zur Entfernung von Cyaniden aus Lösungen mit geringen Konzentrationen.

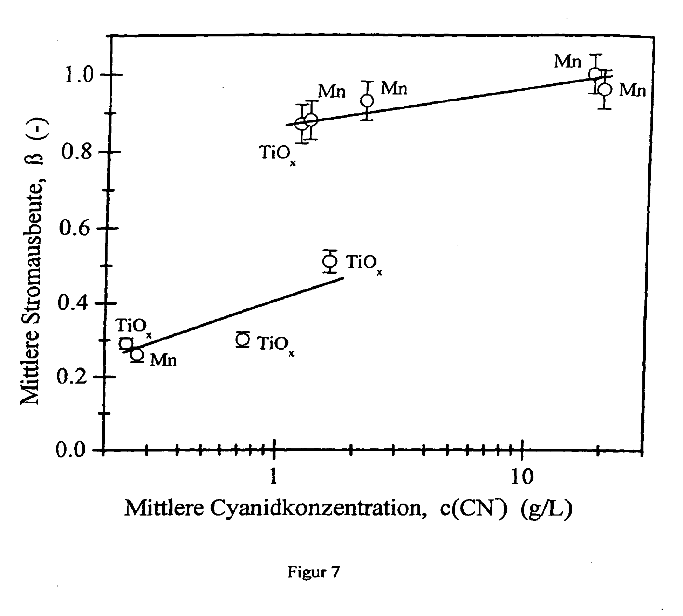

Figur 7 ist eine zusammenfassende Darstellung der mittleren Stromausbeute in Abhängigkeit von der mittleren Cyanidkonzentration bei der Aufarbeitung von galvanotechnischen, cyanid- und schwermetallhaltigen Abfalllösungen mittels erfindungsgemäßer Zelle gemäß den Ergebnissen der Tabelle 1.

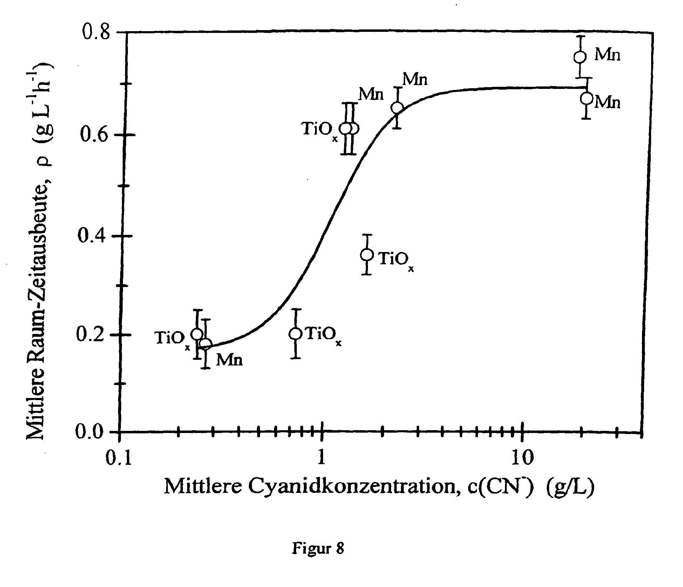

Figur 8 ist eine zusammenfassende Darstellung der mittleren Raum-, Zeitausbeute in Abhängigkeit von der mittleren Cyanidkonzentration gemäß den Daten nach Tabelle 1.

Aus den Figuren 7 und 8 ist überragende Stromausbeute sowie Raum-, Zeitausbeute der erfindungsgemäßen Zelle, bez. des erfindungsgemäßen Verfahrens ersichtlich. Die Betriebskosten sowie die Dauer der Behandlung bei der Reinigung von wässerigen cyanidhaltigen Lösungen werden dadurch minimiert.

Gewerbliche Anwendbarkeit.

Aus den obigen Ausführungen ist ersichtlich, dass die Erfindung eine Zelle sowie ein Verfahren zur effektiven und wirtschaftlichen von wässerigen cyanidhaltigen Lösungen bereitstellt.

Definitionen:

$A_P$=Partikeloberfläche (=Reaktionsoberfläche)

$A_L$=Leerrohrquerschnittsoberfläche

$A_S$=spezifische Oberfläche (bezogen auf $A_L$)

$c_o$(CN$^-$)=Cyanid-Ausgangskonzentration (Eingang der Zelle)

$c$(CN$^-$)/t=Cyanidkonzentration nach der Elektrolysezeit t

$c$(Me$^{n+}$)=Konzentration der Schwermetalle Cu$^{2+}$, Ni$^{2+}$, Zn$^{2+}$ und Cr$^{3+}$ und Veränderung durch kathodische Reduktion nach der Elektrolysezeit t

$c_{(x=\infty)}$=Konzentration der umzusetzenden CN$^-$-Menge vor der Reaktionsoberfläche, außerhalb der Diffusionsgrenzschicht (="bulk concentration")

$c$(CN$^-$)= mittlere Cyanidkonzentration in der Zelle zwischen der Eingangskonzentration $c_o$ und der Konzentration am Ausfluß der Zelle $c_A$ : $c$(CN$^-$)=($c_o$ + $C_A$)/2

d, h=charakteristische Partikelgeometrie (d=Durchmesser, h=Höhe)

$h_F$=Festbetttiefe

F=Faradaykonstante

$I_Z$=Zellstrom der 14 L-Zelle

$i_b$=Stromdichte bezogen auf den Leerrohrquerschnitt ("bulk current density")

$i_g$=mikrokinetische Grenzstromdichte (bezogen auf die Partikeloberfläche)

$k_s$=Stoffübergangskoeffizient

M(CN$^-$)=Molmasse des Cyanidions

t=Elektrolysezeit

$U_Z$=Zel lspannung

u=Umsatzgrad nach der Elektrolysezeit t

v=Volumenstromgeschwindigkeit

$V_o$= aufzuarbeitende Gesamtvolumen des Abwassers (L=Liter)

V'=Volumenstromdichte, bezogen auf den Leerrohrquerschnitt der Zelle

$V_Z$=Volumen der elektrochemischen Zelle

z=Ladungszahl

$\beta$=mittlere Stromausbeute, bezogen auf $c(CN^-)$

$\vartheta$=Elektrolyttemperatur

$\Delta$=Abstand Festbettanode (Oberkante)-Kathode

$\varepsilon$=Lückengrad

$\kappa$=spezifische elektrische Leitfähigkeit des Elektrolyten

$\rho$=mittlere Raum-Zeit-Ausbeute für den Cyanid-Abbau, hier bezogen auf die 14 L-Zelle; in der Zeit $\Delta t$ umgesetzte Cyanidmasse $\Delta m(CN^-)$ bezogen auf das Volumen der Zelle $V_Z$: $\rho=\{\Delta m(CN^-)/\Delta t\}\cdot 1/V_z$

Tabelle 1: : Ergebnisse zur Aufarbeitung von galvanotechnischen, cyanid-und schwermetallhaltigen Abfalllösungen (Entgiftung) mittels Festbett-elektrolyse (14 L - Elektrolysezelle der Pilotanlage) mit verschiedenen Partikeln in der Festbettanode: Mn-Pardkelschüttung, Elektrolyt-Mn (99,5 %) {1.5 mm Mn-Plättchen mit d=1.5 mm bis 3 mm} und mit TiOx-Magneli-Partikelschüttung (Vergleichsbeispiele) {zylindrische Partikelform mit d=1.6 mm, h=1.6 mm}, ungeteilte Zelle mit Cu-Kathodenblech, Feederelektrode Pb-Lochscheibe, $\Delta \approx 10$ mm, kreisprozess, variable Betriebsbedingungen. Die Schwermetallkationen liegen in komplexierter Form als Cyano-Komplex vor.

| Art der Festbettelektrode | $c_o(CN^-)$ [g/L] | $c(CN')/t$ [g/L][/h] | $\beta$ [-] | u [-] | $U_z$ [V] | $I_z/i_b$ [A]/ [A/dm$^2$] | v [l/h] ($V_0$= 140L) | pH | $\vartheta$ [°C] | $\kappa$ [S·cm$^{-1}$] | $\rho$ [g/ (l-h)] | c(Cu$^{2+/+}$) Anfang/ Ende [mg/L] | c(Ni$^{2+}$) Anfang/ Ende [mg/L] | c(Zn$^{2+}$) Anfang/ Ende [mg/L] | c(Cr$^{3+}$) Anfang/ Ende [mg/L] |
|---|---|---|---|---|---|---|---|---|---|---|---|---|---|---|---|
| Mangan-Paltikel $h_r$=4 cm, $\varepsilon$=0.52 | 20.1 | 18.5/24 h | 0.96 | 0.08 | 4.1 | 20/2.83 | 150 | 13.9-13.5 | 30-33 | 0.32-0.30 | 0.67 | | | | |
| Mangan-Partikel $h_F$=4 cm, $\varepsilon$=0.52 | 18.5 | 16.7/24 h | ~1 | 0.10 | 5.1 | 20.1/2.84 | 150 | 13.9-13.5 | 30-33 | 0.32-0.30 | 0.75 | 5500/800 | 8.7/0.05 | 4500/800 | 023/0.28 |
| Mangan-Partikel $h_F$=4 cm, $\varepsilon$=0.52 | 2.35 | 1.96/6 h | 0.93 | 0.17 | 9.5 | 20.1/2.84 | 150 | 13.9-13.5 | 30-33 | 0.32-0.30 | 0.65 | | | | |
| Mangan-Partikel $h_F$=4 cm, $\varepsilon$=0.52 | 1.96 | 0.49/24 h | 0.88 | 0.75 | 9.2 | 20.1/2.84 | 150 | 13.9-13.5 | 30-33 | 0.32-0.30 | 0.61 | | | | |
| Mangan-Partikel $h_F$=4 cm, $\varepsilon$=0.52 | 0.49 | 0.051/24 h | 0.26 | 0.90 | 9.2 | 20.1/2.84 | 150 | 13.9-13.5 | 30-33 | 0.32-0.30 | 0.18 | 230/33 | 0.75/0.27 | 160/63 | 0.26/0.23 |
| TiO$_x$- Magneli-Partikel, $h_F$=3 cm, $\varepsilon$=0.54 | 1.96 | 0.49/24 h | 0.87 | 0.75 | 4.2-6 | 20.2/2.86 | 150 | 13.9-13.5 | 30 | 0.32-0.30 | 0.61 | 450/48 | 1.9/<0.05 | 98/2.4 | 0.18/0.08 |
| TiO,-Magneli-Partikel, $h_F$-3 cm, $\varepsilon$=0.54 | 0.49 | <0.01/24 h | 0.29 | ~1 | 6-6.4 | 20.2/2.86 | 150 | 13.9-13.5 | 30 | 0.32-0.30 | 0.20 | | | | |
| TiO$_x$-Magneli-Partikel, $h_F$-3 cm, $\varepsilon$=0.54 | 0.98 | 0.49/24 h | 0.30 | 0.50 | 4.3-4.4 | 20.1/2.84 | 150 | 13.6-12.9 | 23-24 | 0.247-0.246 | 0.20 | | | | |

(fortgesetzt)

| Art der Festbettelektrode | $c_o(CN^-)$ [g/L] | $c(CN')/t$ [g/L][/h] | $\beta$ [-] | $u$ [-] | $U_z$ [V] | $I_z/i_b$ [A]/ [A/dm$^2$] | $v$ [l/h] ($V_0$=140L) | pH | $\vartheta$ [°C] | $\kappa$ [S·cm$^{-1}$] | $\rho$ [g/ (l-h)] | $c(Cu^{2+/+})$ Anfang/ Ende [mg/L] | $c(Ni^{2+})$ Anfang/ Ende [mg/L] | $c(Zn^{2+})$ Anfang/ Ende [mg/L] | $c(Cr^{3+})$ Anfang/ Ende [mg/L] |
|---|---|---|---|---|---|---|---|---|---|---|---|---|---|---|---|
| TiO$_x$-Magneli-Partikel, $h_F$=4 cm, $\varepsilon$=0.54 | 2.45 | 0.74/48 h | 0.51 | 0.70 | 5.0-4.9 | 20,2/2.86 | 150 | 13.0-12.1 | 28-26 | 190-185 | 0.36 | | | | |

**Patentansprüche**

1. Verfahren zur anodischen Oxidation von Cyaniden in wässerigen, Metall-Kationen enthaltenden Abwässern, wobei die zu reinigende Lösung durch ein Partikelbett (12) einer Festbettanode (10) hindurchgeleitet sowie an einer Kathode (8) vorbeigeleitet wird, **dadurch gekennzeichnet, dass** das Partikelbett (12) aus Partikeln aus Mangan mit einer Reinheit von wenigstens 99%, bevorzugt 99.5%, oder Mischungen dieser Partikel mit Partikeln bestehend aus Oxiden des Titans in der Magneli-Phase gebildet ist und weiterhin eine Gleichstromspannung an Anode und Kathode angelegt ist.

2. Verfahren nach Anspruch 1, **dadurch gekennzeichnet, dass** das Partikelbett (12) eine Festbettiefe hF im Bereich von 2 bis 8 cm, bevorzugt 3 bis 6 cm, besonders bevorzugt 5 bis 6 cm und einen durchschnittlichen Lückengrad epsilon im Bereich von 0,4 bis 0,65, bevorzugt 0,45 bis 0,6, besonders bevorzugt 0,5 bis 0,55 aufweist.

3. Verfahren nach Anspruch 1 oder 2, **dadurch gekennzeichnet, dass** die cyanidhaltige wässerige Lösung so geleitet wird, dass sie zuerst durch die Festbettanode (10) hindurchtritt und anschliessend die Kathode (8) kontaktiert.

4. Verfahren nach einem der Ansprüche 1 bis 3, **dadurch gekennzeichnet, dass** der pH-Wert der cyanidhaltigen wässerigen Lösung auf einen im Bereich von 8 bis 14, vorzugsweise 13 bis 14, eingestellt ist.

5. Verfahren nach einem der Ansprüche 1 bis 4, **dadurch gekennzeichnet, dass** das Cyanid aus in der zu reinigenden Lösung vorliegenden, kinetisch und thermodynamisch stabilen Metall-Cyanid-Komplexen, an der Festbettanode (10) oxidiert wird und die freigeworden Metallkationen an der Kathode abgeschieden werden.

6. Verfahren nach Anspruch 5, **dadurch gekennzeichnet, dass** der Metall-Cyanid-Komplex $[Ni(CN)_4]^{2-}$ ist.

7. Zelle zur Durchführung des Verfahrens nach einem der vorhergehenden Ansprüche, umfassend eine Festbettanode (10) sowie eine Kathode (8), **dadurch gekennzeichnet, dass** das Partikelbett (12) der Anode (10) aus Partikeln gebildet ist, bestehend aus Mangan oder Mischungen dieser Partikel mit Partikeln, bestehend aus den Oxiden des Titans, die in der Magneli-Phase vorliegen und die Manganpartikel eine Reinheit von wenigstens 99%, bevorzugt 99.5%, aufweisen.

8. Zelle nach Anspruch 7, **dadurch gekennzeichnet, dass** das Partikelbett (12) eine Festbettiefe hF im Bereich von 2 bis 8 cm, bevorzugt 3 bis 6 cm, besonders bevorzugt 5 bis 6 cm und einen durchschnittlichen Lückengrad epsilon im Bereich von 0,4 bis 0,65, bevorzugt 0,45 bis 0,6, besonders bevorzugt 0,5 bis 0,55 aufweist.

9. Zelle nach Anspruch 7 oder 8, **dadurch gekennzeichnet, dass** die Partikelgrösse 0,5 bis 4 mm, vorzugsweise 1,0 bis 3,5 mm, besonders bevorzugt 1,6 bis 3.0 mm beträgt.

10. Zelle nach einem der Ansprüche 7 bis 9, **dadurch gekennzeichnet, dass** die Spannung an die Festbettanode mittels einer Federelektrode (11) angelegt wird.

11. Zelle nach einem der Ansprüche 7 bis 10, **dadurch gekennzeichnet, dass** die Kathode (8) in Form einer Lochscheibe ausgebildet und oberhalb der Festbettanode angeordnet ist.

12. Zelle nach einem der Ansprüche 7 bis 11, **dadurch gekennzeichnet, dass** die Kathode (8) aus Kupfer oder Graphit besteht.

13. Zelle nach einem der Ansprüche 7 bis 12, **dadurch gekennzeichnet, dass** die cyanidhaltige wässerige Lösung so geleitet wird, dass sie zuerst durch die Festbettanode (10) hindurchtritt und anschliessend die Kathode (8) kontaktiert.

**Claims**

1. A method for anodic oxidation of cyanides in aqueous waste waters containing metal cations, the solution to be purified being passed through a particle bed (12) of a fixed-bed anode (10) and passed over a cathode (8), **characterised in that** the particle bed (12) is formed of particles of manganese having a purity of at least 99 %, preferably 99.5 %, or is formed of mixtures of these particles with particles consisting of oxides of titanium in the Magneli phase and a d.c. voltage is also applied to the anode and cathode.

2. The method according to claim 1, **characterised in that** the particle bed (12) has a fixed-bed depth hF in the range of 2 to 8 cm, preferably 3 to 6 cm, more preferably 5 to 6 cm and an average voidage epsilon in the range of 0.4 to 0.65, preferably 0.45 to 0.6, more preferably 0.5 to 0.55.

3. The method according to either claim 1 or claim 2, **characterised in that** the cyanide-containing aqueous solution is guided so that it first passes through the fixed-bed anode (10) and then contacts the cathode (8).

4. The method according to any one of claims 1 to 3, **characterised in that** the pH value of the cyanide-containing aqueous solution is adjusted to a pH value in the range of 8 to 14, preferably 13 to 14.

5. The method according to any one of claims 1 to 4, **characterised in that** the cyanide from kinetically and thermodynamically stable metal-cyanide complexes present in the solution to be purified is oxidised at the fixed-bed anode (10) and the released metal cations are deposited on the cathode.

6. The method according to claim 5, **characterised in that** the metal-cyanide complex is $[Ni(CN)_4]^{2-}$.

7. A cell for carrying out the method according to any one of the preceding claims, comprising a fixed-bed anode (10) and a cathode (8), **characterised in that** the particle bed (12) of the anode (10) is formed of particles consisting of manganese or mixtures of these particles with particles consisting of the oxides of titanium, which are present in the Magneli phase, and the manganese particles have a purity of at least 99 %, preferably 99.5 %.

8. The cell according to claim 7, **characterised in that** the particle bed (12) has a fixed-bed depth hF in the range of 2 to 8 cm, preferably 3 to 6 cm, more preferably 5 to 6 cm and an average voidage epsilon in the range of 0.4 to 0.65, preferably 0.45 to 0.6, more preferably 0.5 to 0.55.

9. The cell according to either claim 7 or claim 8, **characterised in that** the particle size is 0.5 to 4 mm, preferably 1.0 to 3.5 mm, more preferably 1.6 to 3.0 mm.

10. The cell according to any one of claims 7 to 9, **characterised in that** the voltage at the fixed-bed anode is applied by means of a spring electrode (11).

11. The cell according to any one of claims 7 to 10, **characterised in that** the cathode (8) is designed in the form of a perforated disc and is arranged above the fixed-bed anode.

12. The cell according to any one of claims 7 to 11, **characterised in that** the cathode (8) consists of copper or graphite.

13. The cell according to any one of claims 7 to 12, **characterised in that** the cyanide-containing aqueous solution is guided so that it first passes through the fixed-bed anode (10) and then contacts the cathode (8).

**Revendications**

1. Procédé pour l'oxydation anodique de cyanures dans des effluents aqueux contenant des cations métalliques, la solution à épurer étant dirigée à travers un lit de particules (12) d'une anode à lit fixe (10) et devant une cathode (8), **caractérisé en ce que** le lit de particules (12) est formé de particules de manganèse d'une pureté d'au moins 99 %, de préférence de 99,5 % ou de mélanges desdites particules avec des particules constituées d'oxydes de titanes dans la phase Magnéli et par la suite une tension de courant continu est appliquée sur l'anode et sur la cathode.

2. Procédé selon la revendication 1, **caractérisé en ce que** le lit de particules (12) présente une profondeur de lit fixe hF de l'ordre du 2 à 8 cm, de préférence de 3 à 6 cm, de façon particulièrement préférée de 5 à 6 cm et un taux de vides epsilon de l'ordre de 0,4 à 0,65, de préférence de 0,45 à 0,6, de façon particulièrement préférée de 0,5 à 0,55.

3. Procédé selon la revendication 1 ou 2, **caractérisé en ce que** la solution aqueuse contenant du cyanure est dirigée de sorte à traverser d'abord l'anode à lit fixe 10) et à contacter par la suite la cathode (8).

4. Procédé selon l'une quelconque des revendications 1 à 3, **caractérisé en ce que** la valeur pH de la solution aqueuse contenant du cyanure est réglée dans un ordre de 8 à 14, de préférence de 13 à 14.

**5.** Procédé selon l'une quelconque des revendications 1 à 4, **caractérisé en ce que** le cyanure à partir de complexes métal-cyanure, stables du point de vue cinétique et thermodynamique et présents dans la solution à épurer est oxydé sur l'anode à lit fixe (10) et les cations métalliques libérés sont séparés sur la cathode.

**6.** Procédé selon la revendication 5, **caractérisé en ce que** le complexe métal-cyanure est du $[Ni(CN)_4]^{2-}$.

**7.** Cellule pour la réalisation du procédé selon l'une quelconque des revendications précédentes, comprenant une anode à lit fixe (10), ainsi qu'une cathode (8), **caractérisée en ce que** le lit de particules (12) de l'anode (10) est formé de particules constituées de manganèse ou de mélanges desdites particules avec des particules constituées des oxydes du titane qui sont présents dans la phase Magnéli et **en ce que** les particules de manganèse présentent une pureté d'au moins 99 %, de préférence de 99,5 %.

**8.** Cellule selon la revendication 7, **caractérisée en ce que** le lit de particules (12) présente une profondeur de lit fixe hF de l'ordre de 2 à 8 cm, de préférence de 3 à 6 cm, de façon particulièrement préférée de 5 à 6 cm et un taux de vides epsilon de l'ordre de 0,4 à 0,65, de préférence de 0,45 à 0,6, de façon particulièrement préférée de 0,5 à 0,55.

**9.** Cellule selon la revendication 7 ou 8, **caractérisée en ce que** la taille des particules est de 0,5 à 4 mm, de préférence de 1,0 à 3,5 mm, de façon particulièrement préférée de 1,6 à 3,0 mm.

**10.** Cellule selon l'une quelconque des revendications 7 à 9, **caractérisée en ce que** la tension est appliquée sur l'anode à lit fixe au moyen d'une électrode à pince à ressort (11).

**11.** Cellule selon l'une quelconque des revendications 7 à 10, **caractérisée en ce que** la cathode (8) est conçue sous la forme d'un disque perforé et disposée au-dessus de l'anode à lit fixe.

**12.** Cellule selon l'une quelconque des revendications 7 à 11, **caractérisée en ce que** la cathode (8) est en cuivre ou en graphite.

**13.** Cellule selon l'une quelconque des revendications 7 à 12, **caractérisée en ce que** la solution aqueuse contenant du cyanure est dirigée de sorte à traverser d'abord l'anode à lit fixe (10) et à contacter ensuite la cathode (8).

Figur: 1

Kathode

Anode

Vorratsbehälter

(6)

EP 1 518 828 B1

Figur 2

Figur 3

Figur 4

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2316124
- DE 40470766
- GB 2051865 A
- US 4569729 A
- EP 0047595 A

**In der Beschreibung aufgeführte Nicht-Patentliteratur**

- Taschenbuch der Abwasser. **Graef, R.** Umwelttechnik in der Oberflächenveredelung. Verlag Karl Hansa, 1998, 135-146